# EUROPEAN PATENT APPLICATION

(11) **EP 0 641 127 A2**
(43) Date of publication of application: **01.03.1995**
(21) Application number: 94113555.0
(22) Date of filing: 30.08.1994
(51) Int. Cl.: H04N 7/00

(54) **Widescreen TV transmitting apparatus**

(30) Priority: 31.08.1993 JP 216741/93; 08.02.1994 JP 14377/94
(71) Applicant: MATSUSHITA ELECTRIC INDUSTRIAL CO., LTD., Kadoma-shi, Osaka 571 (JP); KABUSHIKI KAISHA TOSHIBA, Kawasaki-shi, Kanagawa-ken 210 (JP); NIPPON TELEVISION NETWORK CORPORATION, Tokyo 102 (JP)
(72) Inventor: Yasumoto, Yoshio, Nara-shi, Nara 631 (JP); Kawai, Kiyoyuki, Yokosuka-shi, Tokyo 238 (JP); Kimata, Yoshihide, Nerima-ku, Tokyo 179 (JP)
(74) Representative: Grünecker, Kinkeldey, Stockmair & Schwanhäusser Anwaltssozietät

(57) **Abstract**

A widescreen television transmitting apparatus at sending side of the invention comprises a circuit (102,103) for receiving a video signal of progressive scanning with aspect ratio of 4:3 and 480 effective scanning lines, and converting to 360 effective scanning lines, a circuit (109,114,115) for converting from progressive scanning to interlaced scanning, a circuit (110-112,116-118) for picking up a horizontal scanning line difference signal to be discarded when converting from progressive to interlaced, means (113,119-121,123) for multiplexing and transmitting the horizontal scanning line difference signal by reshuffling in the center panel, circuit (220,507) for picking up a correction signal correlated with the horizontal scanning line difference signal from the center panel, and a circuit (222,223,505,508) for controlling the amplitude of the multiplex signal in the upper and bottom panel by correction signal, and subtracting itself. A widescreen transmitting apparatus at receiving side of the invention is to reproduce the signal transmitted by the transmitting apparatus at the sending side of the invention, and display the original widescreen television signal.

## Description

### Background of the Invention

### 1. Field of the Invention

The present invention relates to a transmitting apparatus and a receiving apparatus of widescreen television signals capable of transmitting picture of a larger aspect ratio at high picture quality as compared with the existing television, while keeping compatibility with the existing television broadcast, within the transmission band used in the existing television broadcast.

### 2. Description of the Prior Art

The existing color television broadcast in Japan runs on the specification of 525 scanning lines, 2:1 interlaced scanning, luminance signal horizontal bandwidth of 4.2 MHz and aspect ratio of 4:3, and more than 40 years have passed since it was put in commercial use. In this period, along with the request for high definition screen and advancement of performance of television receiver, various new television systems have been proposed. In this background, widescreen TV broadcasting systems featuring a wide screen while keeping compatibility with the existing broadcasting have been proposed. One of them is known as letterbox system proposed by Lippman et al. in "Single-channel Backward-compatible EDTV Systems" (SMPTE J. pp. 14-19, Jan. 1989), in which the number of effective scanning lines is compressed from 480 lines to 360 lines per frame (240 lines to 180 lines per field), and the black portions are left over in the top and bottom (called upper and bottom panel). As a result, the aspect ratio is 16:9, but the vertical resolution is lowered, which is compensated by transmitting vertical high frequency component in the upper and bottom panel as helper signal.

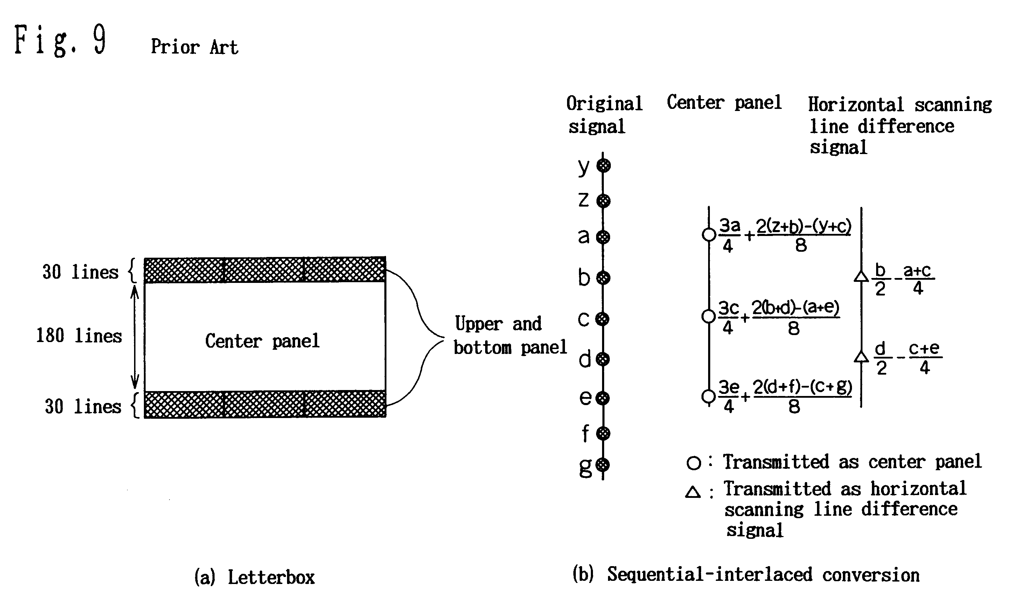

Besides, in the case of using the signal source by sequential scanning of 1:1, it is also considered to transmit horizontal scanning line difference signal generated when converting into 2:1 interlaced scanning as a vertical temporal helper signal additionally in the upper and bottom panel. This conversion from sequential to interlaced scanning is particularly known by the method using so-called SSKF disclosed by D.Gall and A. Tabatabai in "Sub-band Coding of Digital Images Using Symmetric Short Kernel Filters and Arithmetic Coding Techniques" (IEEE Proc. ICASPP, pp. 761-764, 1988). In the example shown in Fig. 9, using this SSKF, the signals decimated one out of two by passing through a vertical low pass filter of five taps of which coefficients are -1/8, 1/4, 3/4, 1/4, and -1/8 from the original signals of sequential scanning are transmitted as principal screen, and the signal decimated one out of two by passing through a vertical high pass filter of four taps of which coefficients are -1/4, 1/2,and -1/4 from the original signals are transmitted as horizontal scanning line difference signal, both as helper signals.

In such widescreen TV transmitting apparatus, both vertical high frequency helper signal and vertical temporal helper signal are transmitted as helper signals in the upper and bottom panel. The upper and bottom panel has 120 lines per frame, and the helper signals are transmitted by usually compressing the time axis to 1/3 in the horizontal direction. However, when the helper signals are directly multiplexed in the upper and bottom panel, disturbing flicker is evident when seen on an existing receiver. In this case, certain amplitude limitation or other restriction may be necessary, but the effect of the helper signals is sacrificed as a matter of course.

### Summary of the Invention

It is hence a primary object of the invention to present a widescreen TV transmitting apparatus capable of minimizing the disturbance in an existing receiver by helper signals in the upper and bottom panel for keeping compatibility with the existing television broadcast.

To achieve the object, in the widescreen TV transmitting apparatus of the invention, from the horizontal scanning line difference signal multiplexed in the upper and bottom panel, the portion having a higher correlation with the horizontal scanning line difference signal is extracted as a helper signal out of the signals transmitted in the center panel one field before, the helper signal is subtracted from the horizontal scanning line difference signal, and the amplitude of the horizontal scanning line difference signal is controlled on the basis of the helper signal, thereby decreasing the disturbance in the upper and bottom panel when received in an existing receiver.

According to a first technique of the invention, by subtracting a helper signal from the horizontal scanning line difference signal, the correlation of the two is very high near the still picture, and the amplitude of the horizontal scanning line difference signal decreases, thereby reducing the disturbance in the existing receiver. Near the moving picture, to the contrary, it may be increased in a very rare case. According to a second technique of the invention, by controlling the amplitude of the horizontal scanning line difference signal, it is decreased where the amplitude is large, so that the disturbance in the existing receiver is reduced. In this case, where the amplitude of the horizontal scanning line difference signal is small, by increasing the horizontal scanning line difference signal, the S/N ratio can be improved.

Thus, while maintaining the conventional system format of 525 scanning lines, 2:1 interlaced scanning and luminance signal horizontal bandwidth of 4.2 MHz, a widescreen picture of high quality can be transmitted. At the same time, the vertical temporal helper signal can be multiplexed and transmitted while visually decreasing the effect of disturbance of the upper and bottom panel when received by an existing receiver.

### Brief Description of the Drawings

Fig. 1 is a block diagram of a transmitting apparatus at sending side of widescreen television signal in an embodiment of the invention.

Fig. 2 is a block diagram of a transmitting apparatus at sending side of widescreen television signal in other embodiment of the invention.

Fig. 3 is a block diagram of a transmitting apparatus at receiving side of widescreen television signal in an embodiment of the invention.

Fig. 4 is a block diagram of a transmitting apparatus at receiving side of widescreen television signal in other embodiment of the invention.

Fig. 5 is a block diagram of a transmitting apparatus at sending side of widescreen television signal in a different embodiment of the invention.

Fig. 6 is a block diagram of a transmitting apparatus at receiving side of widescreen television signal in a different embodiment of the invention.

Fig. 7 is a block diagram of widescreen television signal in a different embodiment of the invention.

Fig. 8 is a characteristic diagram of conversion formula of table conversion to be used in a widescreen television transmitting apparatus in an embodiment of the invention.

Fig. 9 is an explanatory diagram of letterbox system and sequential-interlaced scanning conversion in the prior art.

### Description of the Preferred Embodiments

A widescreen TV transmitting apparatus in an embodiment of the invention is described below while referring to the accompanying drawings.

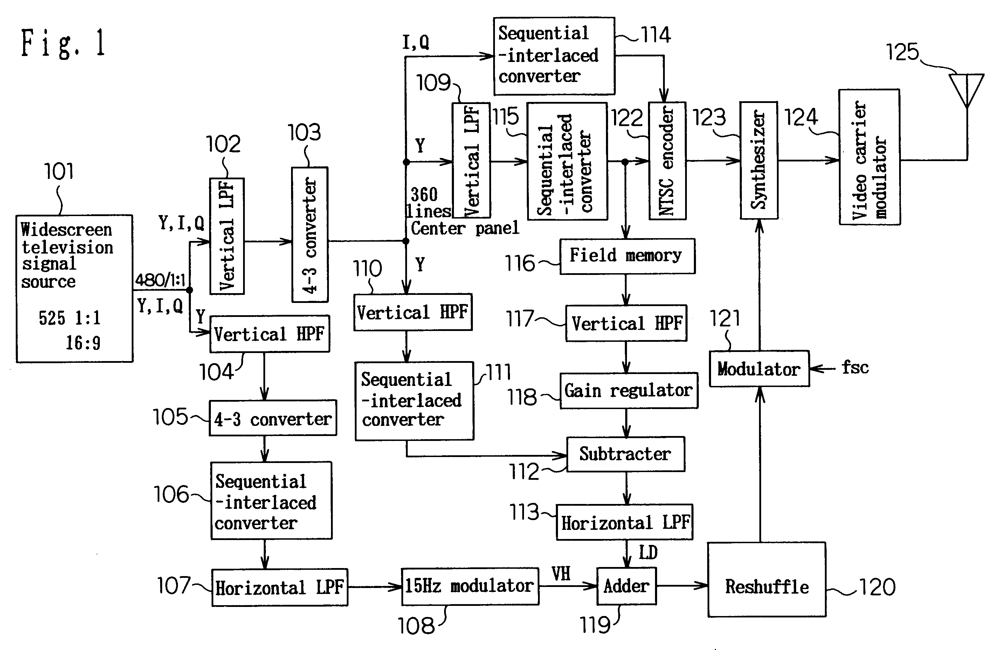

Fig. 1 is a block diagram of a transmitting apparatus at sending side of widescreen television signal of the invention. A widescreen television signal source 101 produces a luminance signal Y and color difference signals I, Q with aspect ratio of 16:9 by sequentially scanning in 525 scanning lines (480 effective scanning lines). A vertical LPF (low pass filter) 102 limits the vertical resolution under 360 TV lines in order to prevent aliasing , prior to conversion of effective scanning lines from 480 to 360. Its output signal is fed into a 4-3 converter 103, and the scanning lines are converted from 480 to 360.

To compensate for the vertical resolution lost by such letterbox processing, a vertical high frequency helper signal VH is generated. By a vertical HPF (high pass filter) 104, the vertical high frequency components (components from 360 TV lines to 480 TV lines) of luminance signal are taken out. By a 4-3 converter 105, further, 480 scanning lines are converted into 360 lines without losing information. The vertical high frequency components are converted from 360 scanning lines to 180 scanning lines by a sequential-interlaced converter 106.

The vertical high frequency helper signal is limited of the horizontal bandwidth to 1.4 MHz by a horizontal LPF 107, and is modulated at 15 Hz by a 15 Hz modulator 108. This modulator 108 is equivalent to inverting the signals in every frame. This modulation process is given as pretreatment for adding this signal to the vertical temporal helper signal, and it is intended to facilitate separation of both signals at the receiving side.

On the other hand, of the output signal of the 4-3 converter 103 converted to 360 lines, the luminance signal is fed into a vertical LPF 109 and a vertical HPF 110. The signal route for composing the center panel is described below.

The vertical LPF 109 is mainly intended to decrease flicker when the center panel is observed in an existing receiver. An example of the vertical LPF 109 comprises five taps of -1/8, 1/4, 3/4, /14, and -1/8. A sequential-interlaced converter 115 is to convert from sequential scanning signal to a interlaced scanning signal, and 180 scanning lines are decimated and extracted from 360 scanning lines. In this way, the output of the sequential-interlaced converter 115 is 180 lines per field. This is called the center panel.

Of the output signals of the 4-3 converter 103, the color difference signal is fed into the sequential-interlaced converter 114, and 180 scanning lines are decimated and extracted from the 360 scanning lines. The output of the sequential-interlaced converter 114 and the output of the sequential-interlaced converter 115 are fed into an NTSC encoder 122, and the luminance signal Y and color difference signals I and Q are synthesized, and an NTSC signal is generated.

The vertical temporal helper signal is determined as a vertical high frequency component in the vertical HPF 110. The coefficients of the vertical HPF 110 are three taps of -1/4, 1/2, and -1/4. By decimating and putting out 180 lines from 360 scanning lines in the sequential-interlaced converter 111, the signal component is converted to a vertical low frequency range.

As the first principal point of the invention, generation of helper signal by subtracting from the vertical temporal helper signal is executed as follows. An interlaced scanning signal of 180 lines of the center panel produced from the sequential-interlaced converter 115 is delayed by one field in a field memory 116. A vertical HPF 117 is intended to extract a certain component correlated with the vertical temporal helper signal. This filter may be a simple constitution with coefficient at three taps of -1/4, 1/2, and -1/4. Its output is fed into a gain regulator 118, and usually a different gain value is taken depending on the polarity of the input signal. For example, 1/3 if positive, and 1/6 if negative. This value is related with the gain of the vertical HPF 110, and depends on the amplitude of the vertical temporal helper signal. The output of the gain regulator 118 is a correction signal. Finally, in a subtracter 112, this correction signal is subtracted from the vertical temporal helper signal produced from the sequential-interlaced converter 111.

The corrected vertical temporal helper signal is limited of the horizontal bandwidth to 1.4 MHz by the horizontal LPF 113. Finally, added to the vertical high frequency helper signal in an adder 119, time axis compression to 1/3 is effected by reshuffling 120, and reshuffling into the upper and bottom panel is effected at the same time. The signal of 180 lines per field settles within 60 lines by this treatment. This multiplex signal is modulated by color subcarrier fsc in a modulator 121.

Finally, the vertical high frequency helper signal and vertical temporal helper signal modulated at 60 lines per field, and the center panel signal from an NTSC encoder 122 are synthesized in a synthesizer 123. In the synthesizer 123, the NTSC encoded principal signal to the center panel of the period of 180 lines of the letterbox is allocated, while the vertical temporal helper signal and vertical high frequency helper signal are changed over and allocated in the upper and bottom panel. The output of the synthesizer 123 is modulated same as an ordinary NTSC signal in a video carrier modulator 124, and transmitted.

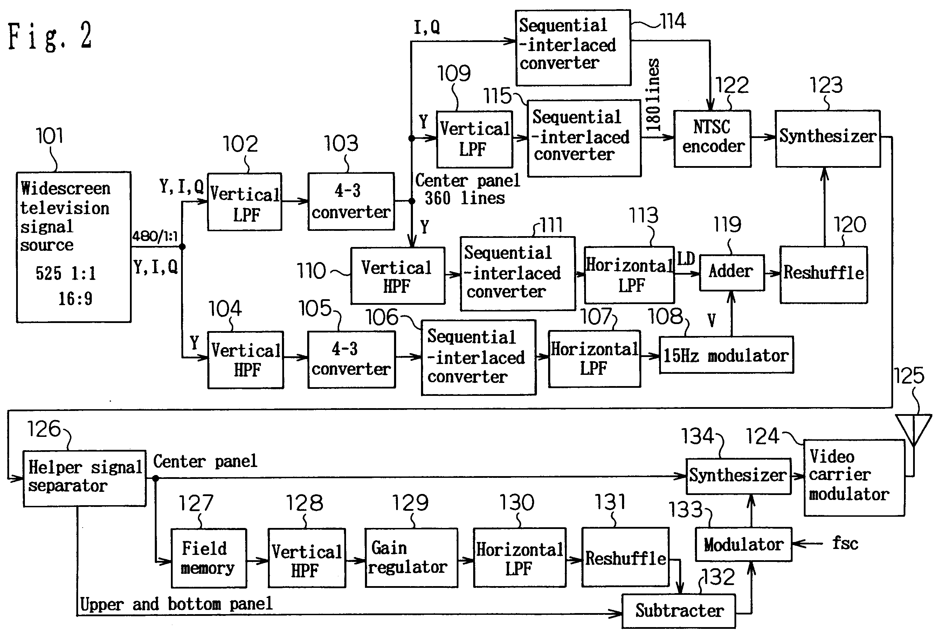

Fig. 2 is a block diagram of transmitting apparatus at sending side of widescreen television signal in other embodiment of the invention. Referring now to this diagram, this encoder is characteristic that the subtraction processing unit by correction signal of vertical temporal helper signal is positioned just before the video carrier modulator, and the other blocks are same as in the encoder shown in Fig. 1. Only the different parts from Fig. 1 are described below.

The vertical high frequency helper signal and the vertical temporal helper signal before subtracting the correction signal are added in the adder 119, and the time axis is compressed to 1/3 by reshuffling 120 to be reshuffled in the upper and bottom panel. This multiplex signal is not modulated, but is synthesized with the center panel signal in the synthesizer 123.

Consequently, it is separated again into the center panel and upper and bottom panel in a helper signal separator 126. From the center panel, in order to generate a correction signal, the signal undergoes the blocks of field memory 127, vertical HPF 128, gain regulator 129, horizontal LPF 130, and reshuffling 131. These actions are same as explained in Fig. 1. Thus generated correction signal is subtracted from the separated multiplex helper in the upper and bottom panel in a subtracter 132, and is modulated by a color subcarrier in a modulator 133, and synthesized again with the center panel in a synthesizer 134.

Generally, in the studio of the existing television broadcasting station, processing is done in the field unit. On the other hand, the vertical temporal helper signal subtracting the correction signal processes over fields, and is not suited to the processing within the studio. Therefore, by processing in the sequence explained herein, it is convenient when the processing in the studio is positioned between the synthesizer 123 and the helper signal separator 126. That is, just before input into the video carrier modulator 124, processing over fields after the helper signal separator 126 is effected, which is very convenient in management, considering together with processing of scene cut or the like.

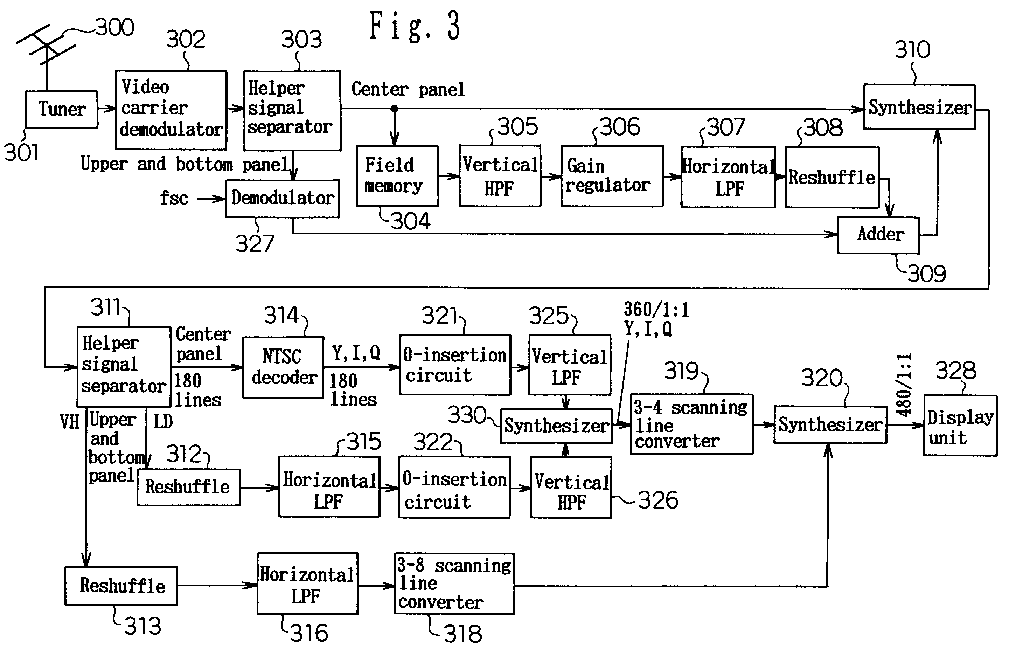

Fig. 3 is a block diagram of transmitting apparatus at receiving side of widescreen television signal of the invention. Sequentially explaining according to the drawing, receiving a widescreen television signal being encoded at the sending side by an antenna 300, a baseband signal demodulated by a video carrier demodulator 302 through a tuner 301 is fed into a helper signal separator 303. This separator 303 is intended to separate into 180 scanning lines per field as the center panel disposed in the middle of the screen, and helper signal of 60 lines per field multiplexed in the upper and bottom panel. The center panel having 180 scanning lines separated by the helper signal separator 303 delays by one field by a field memory 304. A vertical filter 305 is a filter having the same characteristic as the vertical filter 117 in Fig. 1. The gain of the correction signal is adjusted by a gain regulator 306. Further by a horizontal LPF 307, the band is limited under 1.4 MHz, and the time axis is compressed to 1/3 by reshuffling 308, thereby reshuffling into the upper and bottom panel. This is a correction signal subtracted from the vertical temporal helper signal at the sending side.

The upper and bottom panel signal separated in the helper signal separator 303 is demodulated in a demodulator 327, and is added to the correction signal in an adder 309, and the original vertical temporal helper signal is restored and produced. A synthesizer 310 synthesizes the upper and bottom panel and center panel, and synthesizes into an original signal.

The output of the synthesizer 310 is fed into a helper signal separator 311, and this helper signal separator 311 separates and produces vertical high frequency helper signal VH, vertical temporal helper signal LD, and center panel. The output signal including the center panel is fed into an NTSC decoder 314, and is separated into luminance signal Y and color difference signals I and Q. On the other hand, the vertical high frequency helper signal is reshuffled 313, and the time axis is expanded to three times, and is simultaneously positioned in the center panel. The further reshuffled signal is fed into a horizontal LPF 316, and the horizontal band is limited under 1.4 MHz. Furthermore, the vertical high frequency helper signal is expanded in the vertical direction by a 3-8 scanning line converter 318, and is converted into 480 scanning lines.

The separated vertical temporal helper signal is expanded in the time axis to three times by reshuffling 312 and is simultaneously positioned in the center panel. This vertical temporal helper signal is fed into a horizontal LPF 315, and the band is limited to 1.4 MHz, and is fed into a 0-insertion circuit 311 and a vertical HPF 326. The coefficients of the vertical HPF have five taps of -1/4, -1/2, 3/2, -1/2, and -1/4.

On the other hand, after the center panel signal is fed into a 0-insertion circuit 321 and a vertical LPF 325, and is added with a vertical temporal helper signal in a synthesizer 330. This vertical LPF has coefficients of three taps of 1/2, 1, and 1/2. This series of processing is conversion from interlaced signal to sequential signal. Herein, a sequential scanning signal having a band of 360 TV lines is restored. It relates, however, to the signals of up to 1.4 MHz of luminance signal, and vertical temporal helper signal is not present for the luminance signal of higher band region or color difference signals, and therefore the original sequential scanning signal cannot be restored completely.

Thus reproduced signal of original 360 sequential scanning lines is converted in scanning lines in a 3-4 scanning line converter 319, and a widescreen television signal of 480 sequential scanning lines is reproduced. The vertical high frequency helper signal which is an output of the 3-8 scanning line converter 318 is supplied into the synthesizer 320, thereby adding the components from 360 TV lines to 480 TV lines to the principal signal. Finally, supplied into a display unit 328, an image is displayed.

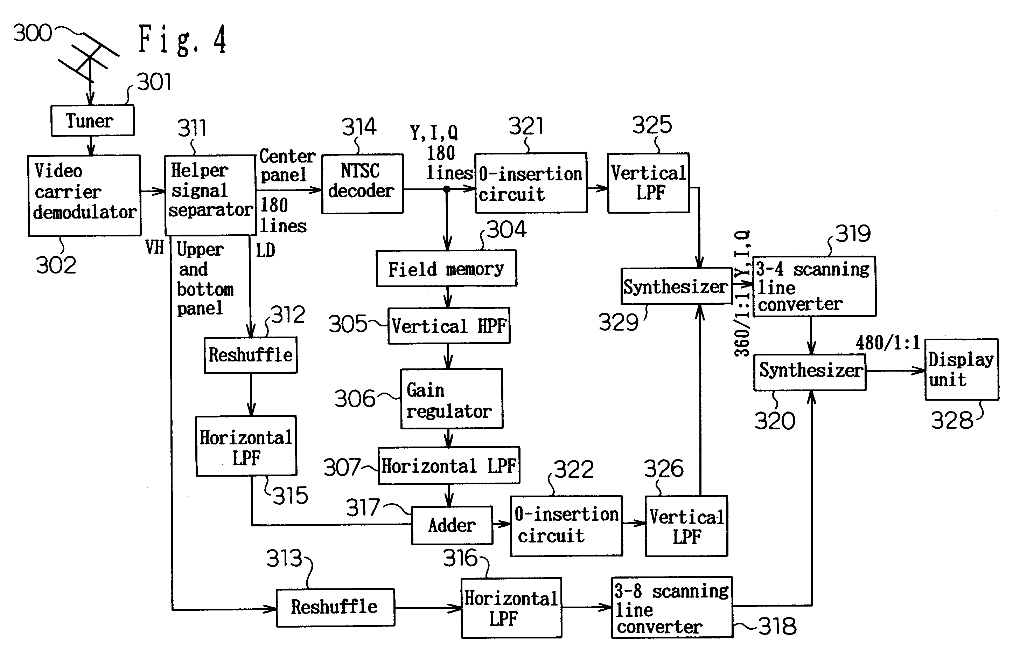

Fig. 4 is a block diagram of transmitting apparatus at receiving side of widescreen television signal in other embodiment of the invention. Different from Fig. 3, this diagram is characterized by that the correction block of vertical temporal helper signal is positioned behind the NTSC decoder, whereas other blocks are same as in Fig. 3. In this configuration, the hardware scale is saved. Only different points from Fig. 3 are described below while referring to Fig. 4. The signal of 180 scanning lines in the center panel produced from the NTSC decoder 314 is fed into the field memory 304, and delayed by one field, and is further introduced into the vertical HPF 305, gain regulator 306, and horizontal LPF 307. This is the same processing as in Fig. 3. What differs from Fig. 3 is that the correction signal is not reshuffled in the position of the upper and bottom panel, but is added with the vertical temporal helper signal already reshuffled in the center panel position in the adder 317.

In the 0-insertion circuit 321 and vertical LPF 325 for interlaced-sequential conversion, 0 is inserted in every one of 180 scanning lines of the center panel being transmitted, and specified vertical LPF is executed. On the other hand, in the corrected vertical temporal helper signal, too, in the 0-insertion circuit 322 and vertical LPF 326, 0 is inserted in every line and specified vertical HPF is effected. The both signals are summed in the synthesizer 329 to be an original sequential signal.

Thus restored sequential scanning signal is converted from 360 lines to 480 lines in the 3-4 scanning line converter 319, that is, 3-4 conversion is effected. In the synthesizer 320, the output of the 3-4 scanning line converter 319 and the vertical high frequency helper signal supplied from the 3-8 scanning line converter 318 are summed, and the original widescreen television signal having a vertical resolution of up to 480 TV lines is reproduced, and displayed in the display unit 328.

In this embodiment, since the correction signals are not reshuffled, the circuit is simple, which is advantageous from the viewpoint of constitution of the receiver. However, the constitution of the receiver is not limited to this, and it requires at least a function of restoring the vertical temporal helper signal corrected for the purpose of reducing the impedance at the sending side.

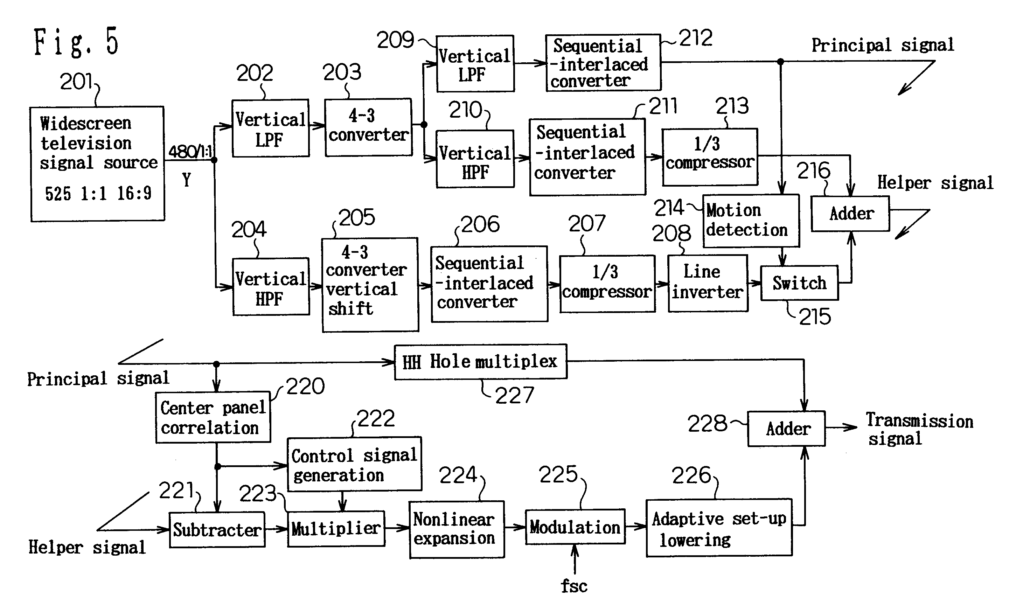

Fig. 5 is a block diagram of transmitting apparatus at sending side of widescreen television screen in a different embodiment of the invention. A widescreen television signal source 201 produces a signal with aspect ratio of 16:9 by sequentially scanning in 525 scanning lines (480 effective scanning lines). A vertical LPF 202 limits the vertical resolution under 360 TV lines in order to prevent aliasing, prior to conversion of effective scanning lines from 480 to 360. Its output signal is fed into a 4-3 converter 203, and the scanning lines are converted from 480 to 360. To compensate for the vertical resolution lost by such letterbox processing, a vertical high frequency helper signal VH is generated. By a vertical HPF 204, the vertical high frequency components (components from 360 TV lines to 480 TV lines) of luminance signal are taken out. By a 4-3 converter/vertical shift 205, further, 480 scanning lines are converted into 360 lines without losing information, while being converted into low frequency region at the same time. By this processing, components from 360 TV lines to 480 TV lines are converted into components from DC to 120 TV lines. The vertical high frequency components are converted from 360 scanning lines to 180 scanning lines by a progressive-interlaced converter 206. The vertical high frequency helper signal VH has the time axis compressed by 1/3 in the horizontal direction by a 1/3 compressor 207 to be 60 scanning lines per field.

On the other hand, the output signal converted into 360 lines of the 4-3 converter 203 is fed into a vertical LPF 209 and a vertical HPF 210. The vertical LPF 209 is mainly intended to decrease the flicker when the center panel is seen in an existing receiver. The vertical LPF 209 possesses, for example, five taps of -1/8, 1/4, 3/4, 1/4, and -1/8. A progressive-interlaced converter 212 is intended to convert a sequential scanning signal into a interlaced scanning signal, and by decimating 360 scanning lines, 180 scanning lines are extracted. In this way, the output of the progressive-interlaced converter 212 has 180 lines per field in the center panel. On the other hand, the vertical temporal helper signal VT is obtained as vertical and temporal high frequency components in the vertical HPF 210. The coefficients of the vertical HPF 210 have three taps of -1/4, 1/2, and -1/4. Furthermore, in the progressive-interlaced converter 211, 360 scanning lines are decimated, and 180 scanning lines are produced. The vertical temporal helper signal VT has the time axis compressed to 1/3 in the horizontal direction by a 1/3 compressor 213 to be 60 scanning lines per field. The vertical high frequency helper signal VH and vertical temporal helper signal VT are both multiplexed in the upper and bottom panel as helper signals. The vertical high frequency helper signal VH is inverted in polarity in every line by a line inverter 208, and by the control of a motion detector 214 of the principal signal, when judged to be still by a switch 215, it is supplied to an adder 216. On the other hand, the vertical temporal helper signal VT is always supplied to the adder 216. The both helper signals are added in the adder 216.

As a second principal point of the invention, generation of control signal for controlling the amplitude of helper signal is effected as follows. It is the correlation of the center panel 220 that calculates the correlation of the helper signal and center panel signal, and it is a circuit 222 that receives the output signal of the center panel correlation and generates a control signal. Basically, the helper signal is highly correlated with the center panel one field before, and by detecting the amplitude of helper signal from the center panel, the control signal is generated so as to decrease when the amplitude of the helper signal is large, and increase when the amplitude is small. On the basis of this control signal, the amplitude of the helper signal is controlled by an multiplier 223.

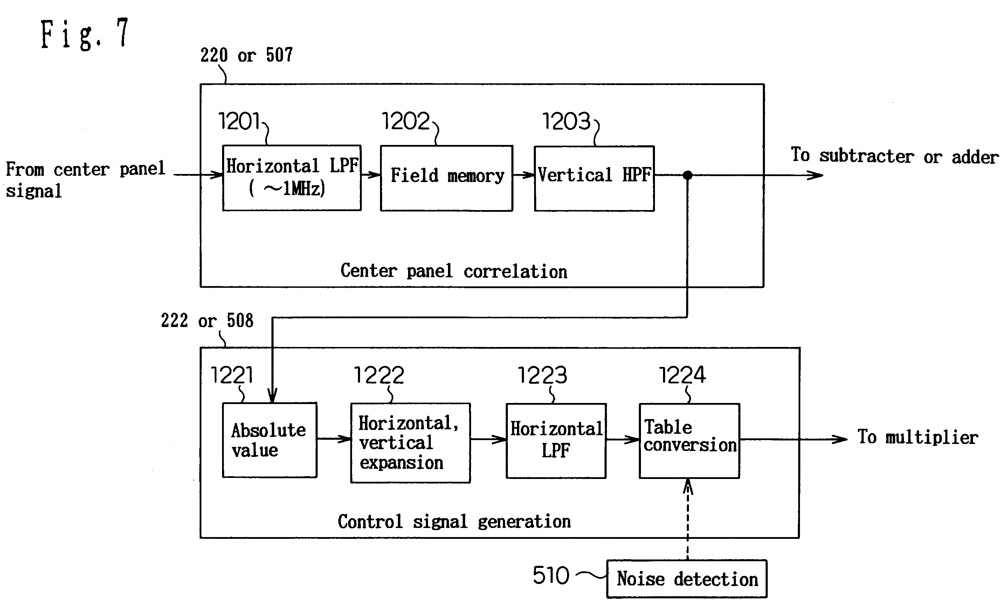

Fig. 7 is a specific block diagram of 220(507) and 222(508). As correlation of center panel, a center panel signal is fed, and components up to 1 MHz are extracted by a horizontal LPF 1201. This is because the helper signal possesses components of only up to 1 MHz. Next, by a field memory 1202, one field is delayed. This is intended to select the line of the same position as the helper signal. Furthermore, by a vertical HPF 1203, components correlated with the vertical temporal helper signal are extracted. This filter may be simple in constitution, having the coefficients at three taps of -1/4, 1/2, and -1/4.

Thus generated signal is a component highly correlated with the helper signal determined from the center panel, and is supplied into a subtracter 121 and a control signal generator 122. The control signal generator 122 is intended to generate a control signal from the output signal of the correlation of the center panel. First, an absolute value is taken in 1221, and horizontal and vertical expansion is effected in 1222. This expansion is intended, for example, to investigate the value of 12 pixels in the horizontal direction and 12 pixels in the vertical direction, and replaced by the maximum value of them. Consequently, the signal band is limited to 0.5 MHz by horizontal LPF 1223. Finally, by table converter 1224, a control signal is generated.

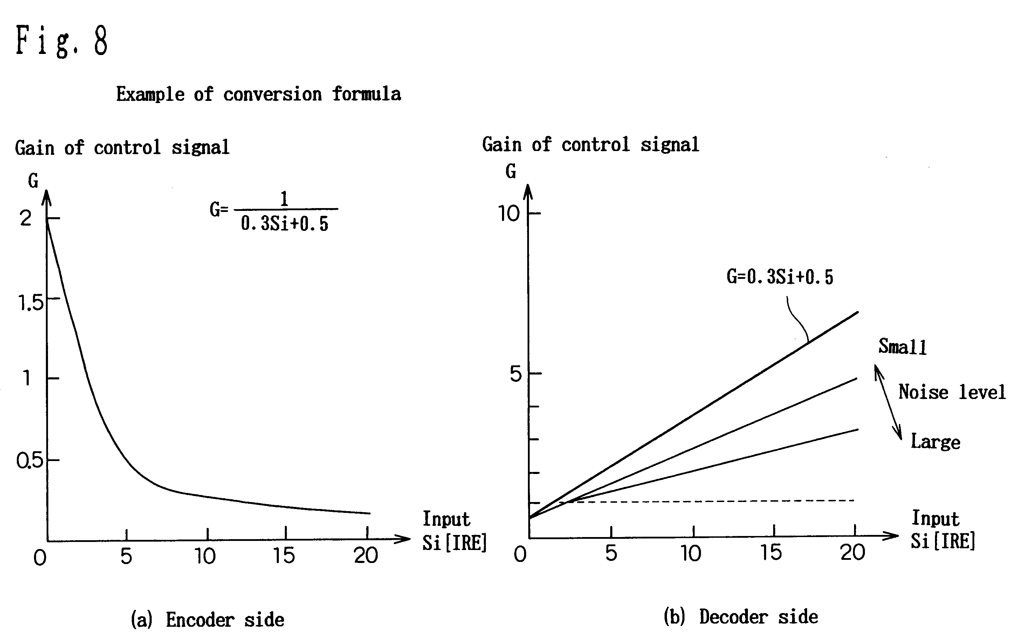

Fig. 8 shows an example of this conversion formula. Fig. 8 (a) shows a conversion formula at sending side, and Fig. 8 (b) is a conversion formula at receiving side. In the sending side example, when the input signal is as large as 20 IRE, the control signal is about 0.3, and when it is small, it is 2. Herein, IRE is a unit of luminance supposing from white to black to be 100. At the receiving side, it may be inverted, but it is also considered not to return to the original size as indicated by broken line. It should be determined in relation to the S/N ratio, and the conversion formula may be changed between a weak electric field and a strong electric field.

As mentioned above, the helper signal controlled of amplitude is limited in amplitude (for example, 15 IRE) in a nonlinear expander 224, and is modulated by color subscarrier fsc in 225. By adaptive set-up lowering 226, the signal average DC level is adaptively lowered. This series of processing is intended to reduce the visual degradation, and if a sufficient effect is obtained by amplitude control of helper signal, it may not be necessary. Or it may be employed partly.

Finally, the principal signal and helper signal passing through HH Hole multiplex 227 are summed in an adder 228. In the adder 228, the principal signal is changed over and synthesized in the period of 180 lines of letterbox, and the helper signal, in the upper and bottom panel. The output of the adder 128 is transmitted same as the ordinary NTSC signal.

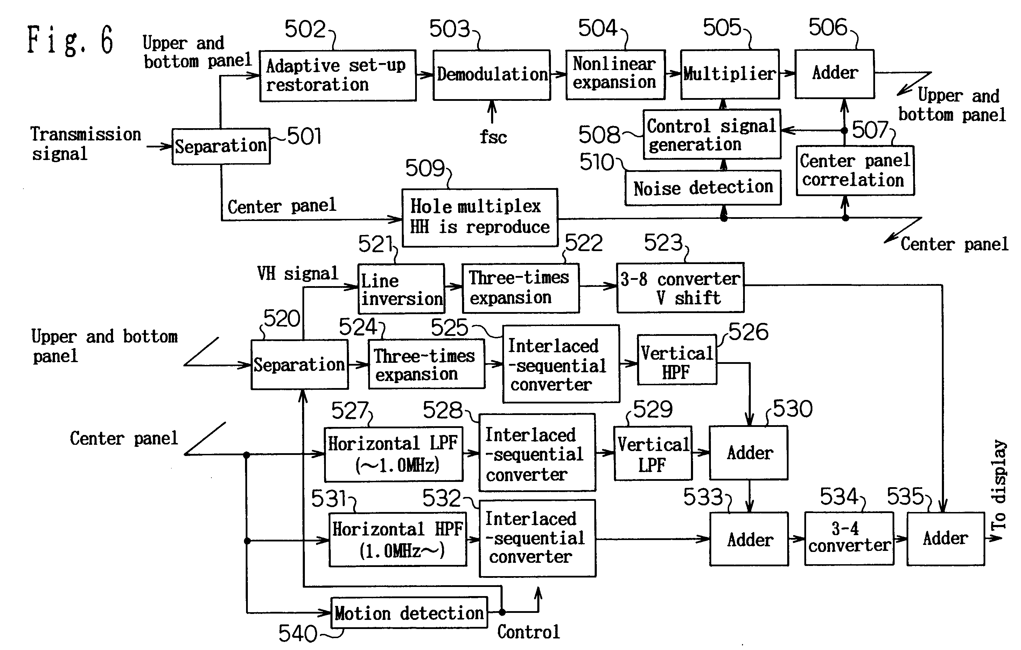

Fig. 6 is a block diagram of transmitting apparatus at receiving side of widescreen television signal in a different embodiment of the invention. Sequentially explaining by reference to the drawing, a widescreen television signal encoded at the sending side is received, and a signal demodulated in baseband is fed into a separator 501. It causes to separate into 180 scanning lines per field in the center panel disposed in the middle of the screen, and helper signal portion of 60 lines per field multiplexed in the upper and bottom panel. In the center panel, first a Hole multiplex HH signal is reproduced in 509. The upper and bottom panel passes through adaptive set-up restoration 502, demodulation 503, and nonlinear expansion 504.

Consequently, the upper and bottom panel is processed in the blocks of multiplier 505, noise detector 510, control signal generator 508, and adder 506 and center panel correlation 507 for restoring the original center panel correlation. These are reverse processes of the sending side, and are intended to restore the amplitude of the helper signal multiplexed and transmitted in the upper and bottom panel, and restore from the preliminarily subtracted transmission of the signal component having correlation with the center panel. However, noise detector 510 may not be necessarily required. Or, as shown in Fig. 8 (b), the control signal may not be exactly same as the one at the sending side, and processing by substantially bypassing the multiplier 505, that is, control signal of 1 may be also possible. Furthermore, if the noise quantity is large by noise detection, the gradient of the straight line of the graph may be so small, and when the noise quantity is small, it may be controlled to increase the inclination. That is, in the block diagram shown in Fig. 7, the result of noise detection 510 is supplied into the table conversion 1224, and the conversion formula can be exchanged.

The helper signal in the upper and bottom panel processed in this way is separated into signal VH and signal VT by separation 520. This separation conforms to the output of the motion detection 540, and VH is multiplexed in the case of still picture, and since VH is multiplexed, the VH is demodulated in line inversion 521. Besides, sine the signal VT is always multiplexed, it is supplied to subsequent three-times expansion 524. The separated vertical temporal helper signal VT is expanded three times in the time axis by 524. In 525, by conversion from interlaced to progressive, the signal is fed into vertical HPF 526. The coefficients of the vertical HPF are five taps of -1/4, -1/2, 3/2, -1/2, and -1/4. The signal VH is also demodulated, and expanded three times in the time axis by 522, and the original signal of 180 lines is restored. Furthermore, by 3-8 converter/vertical shift 523, the scanning lines are converted to 480 lines, and components from original 360 TV lines to 480 TV lines are obtained.

On the other hand, the center panel signal are separated into components of 1 MHz or less and components of 1 MHz or more in the horizontal LPF 527 and horizontal HPF 531. The components up to 1 MHz are inserted 0 in interlaced-progressive converter 528, and supplied to the vertical LPF 529. The coefficient of the vertical LPF are three taps of 1/2, 1, and 1/2. The components more than 1 MHz are fed into the interlaced-progressive converter 532, and an interpolation signal is generated, and is converted into a progressive scanning signal. This process is same as in the conventional Clear Vision. The output of the vertical HPF 526 and the output of the vertical LPF 529 are added in the adder 530, and progressive signals are obtained as for signal components of up to 1 MHz. Furthermore, summing up with the output of the interlaced-progressive converter 532 by the adder 533, a progressive signal of whole band region is obtained. Thus reproduced signal of 360 progressive scanning lines is converted of scanning lines in the 3-4 scanning line converter 534, so that a widescreen television signal of 480 progressive scanning lines is reproduced. The vertical high frequency helper signal which is the output of the 3-8 scanning line converter 523 is supplied into the adder 535, thereby adding the components from 360 TV lines to 480 TV lines to the principal signal. Finally, the image supplied into the display unit is

## Claims

1. A transmitting apparatus for transmitting widescreen television signal with aspect ratio of 16:9 while keeping compatibility with existing television signal standard with aspect ratio of 4:3, said transmitting apparatus :
inserting all information of widescreen television signal in about 3/4 of the central part in a longitudinal direction of a screen,
allocating either a vertical temporal helper signal composed of horizontal scanning line difference signal, or a vertical high frequency helper signal, or both, of an information lost when converting the widescreen television signal from progressive scanning to interlaced scanning in the upper and bottom panel in about 1/8 each in the top and bottom of the screen, and preliminarily subtracting a correction signal composed of a part of widescreen television signal one field before possessing the correlation with the allocated signal, from the signal allocated in the upper and bottom panel.

2. A transmitting apparatus of claim 1, wherein
the signal taken by filtering by a vertical band pass filter with the passing band region near 180 TV lines, from the widescreen television interlaced scanning line signal with aspect ratio of 16:9 transmitted in about 3/4 of the central part in the longitudinal direction of the screen is adjusted of specific gain, and is used as the correction signal.

3. A transmitting apparatus of claim 2, wherein
the coefficients of the vertical band pass filter for generating the correction signal are three taps of -1/4, 1/2, and -1/4.

4. A transmitting apparatus of claim 2, wherein
a gain of a gain regulating circuit for generating the correction signal is 1/3 when the signal input is positive, and 1/6 when the signal input is negative.

5. A transmitting apparatus of claim 2, wherein
a gain of a gain regulating circuit for generating the correction signal is 1/2 when the signal input is positive, and 1/4 when the signal input is negative.

6. A transmitting apparatus of claim 2, wherein
a gain of a gain regulating circuit for generating the correction signal is 3/8 when the signal input is positive, and 3/16 when the signal input is negative.

7. A transmitting apparatus of claim 1, wherein
the correction signal generated by using a widescreen television interlaced scanning line signal positioned in a middle in a longitudinal direction of the screen is limited of its horizontal band region to 1.4 MHz same as a multiplex signal in the upper and bottom panel, and further compressed in time axis and reshuffled in the upper and bottom panel, and subtracted from the multiplex signal in the upper and bottom panel transmitted in multiplex in about 1/8 each in the top and bottom of the screen.

8. A receiving apparatus comprising :
receiving means for receiving signals compatible with an existing system, including (1) a widescreen television signal with aspect ratio of 16:9 in about 3/4 of a center in a longitudinal direction of a screen, and (2) a signal of a vertical temporal helper signal composed of horizontal scanning line difference signal, out of informations lost at a time of conversion of widescreen television signal from progressive scanning to interlaced scanning , in about 1/8 portion each in the top and bottom of the screen, said vertical temporal helper signal being subtracted with a correction signal correlated with the vertical temporal helper signal, out of the widescreen television signal one field before transmitted in a center,
restoring means for restoring the correction signal by making use of the widescreen television signal transmitted in the center, and means for converting the widescreen television signal transmitted in a center in a longitudinal direction of the screen into progressive scanning signal.

9. A receiving apparatus of claim 8, wherein
the widescreen television interlaced scanning signal with aspect ratio of 16:9 transmitted in about 3/4 of the center of the screen in the longitudinal direction is delayed by one field, the signal filtered and taken out from a vertical band pass filter with a passing region near 180 TV lines is adjusted of a specific gain by a gain regulating circuit, and is added to multiplex signal in upper and bottom panel transmitted in multiplex in about 1/8 portion each in the top and bottom of the screen.

10. A receiving apparatus of claim 9, wherein
coefficients of the vertical band pass filter for generating the correction signal are three taps of -1/4, 1/2, and -1/4.

11. A receiving apparatus of claim 9, wherein
the gain of the gain regulating circuit for generating the correction signals 1/3 when the signal input is positive, and 1/6 when the signal input is negative.

12. A receiving apparatus of claim 9, wherein the gain of the gain regulating circuit for generating the correction signal is 1/2 when the signal input is positive, and 1/4 when the signal input is negative.

13. A receiving apparatus of claim 9, wherein
the gain of the gain regulating circuit for generating the correction signal is 3/8 when the signal input is positive, and 3/16 when the signal input is negative.

14. A receiving apparatus of claim 8, wherein
the correction signal generated by using a widescreen television interlaced scanning line signal positioned in a middle in a longitudinal direction of the screen is limited of its horizontal band region to 1.4 MHz same as a multiplex signal in the upper and bottom panel, and further compressed in time axis and reshuffled in the upper and bottom panel, and subtracted from the multiplex signal in the upper and bottom panel transmitted in multiplex in about 1/8 each in the top and bottom of the screen.

15. A transmitting apparatus for transmitting widescreen television signal with aspect ratio of 16:9 while keeping compatibility with existing television signal standard with aspect ratio of 4:3, said transmitting apparatus :
inserting all information of widescreen television signal in about 3/4 of the central part in a longitudinal direction of a screen,
allocating either a vertical temporal helper signal composed of horizontal scanning line difference signal, or a vertical high frequency helper signal, or both, of an information lost when converting the widescreen television signal from progressive scanning to interlaced scanning in the upper and bottom panel in about 1/8 each in the top and bottom of the screen, and
controlling an amplitude of the signal allocated in the upper and bottom panel, by a control signal generated from the widescreen television signal possessing correlation with the signal allocated in the upper and bottom panel.

16. A transmitting apparatus of claim 15, wherein
the control signal for controlling the signal allocated to the upper and bottom panel is generated from the widescreen television signal of the center panel one field before.

17. A transmitting apparatus of claim 15, wherein
the control signal for controlling the signal allocated to the upper and bottom panel is generated from the widescreen television signal of the center panel of the same field.

18. A transmitting apparatus of claim 15, wherein
the control signal for controlling the signal allocated to the upper and bottom panel is generated by extracting a horizontal low frequency component of the widescreen television signal in the center panel.

19. A transmitting apparatus of claim 15, wherein
the control signal for controlling the signal allocated to the upper and bottom panel is generated by extracting a component correlated with the allocated signal from the widescreen television signal in the center panel, and by calculating according to the conversion formula.

20. A receiving apparatus comprising :
receiving means for receiving signals compatible with the existing system, including widescreen television signal with aspect ratio of 16:9, in about 3/4 of the center of the screen in the longitudinal direction, and the additional signal composed of vertical temporal helper signal made of horizontal scanning line difference signal, or vertical high frequency helper signal, or both signals, out of the information lost at the time of conversion of the widescreen television signal from progressive scanning to interlaced scanning in a portion of about 1/8 each in the top and bottom of the screen, with its amplitude reduced preliminarily by a control signal generated from the widescreen television signal transmitted in the center, correlated with the additional signal,
restoring means for restoring the original additional signal by generating the control signal from the widescreen television signal transmitted in the center, and
means for converting the widescreen television signal transmitted in the center into progressive scanning signal by using the restored original additional signal.

21. A receiving apparatus comprising :
receiving means for receiving signals compatible with the existing system, including widescreen television signal with aspect ratio of 16:9, in about 3/4 of the center of the screen in the longitudinal direction, and the additional signal composed of vertical temporal helper signal made of horizontal scanning line difference signal, or vertical high frequency helper signal, or both signals, out of the information lost at the time of conversion of the widescreen television signal from progressive scanning to interlaced scanning in a portion of about 1/8 each in the top and bottom of the screen, with its amplitude reduced preliminarily by a control signal generated from the widescreen television signal transmitted in the center, correlated with the additional signal,
generating means for generation the control signal from the widescreen television signal transmitted in the center,
means for detecting noise quantity of the received widescreen television signal, and
means for converting the widescreen television signal transmitted in the center into progressive scanning system by reproducing the additional signal with original amplitude only when the noise is small.

22. A receiving apparatus of claim 20, wherein
the control signal for controlling the additional signal to be multiplexed in the upper and bottom panel is generated from the widescreen television signal in the center panel one field before.

23. A receiving apparatus of claim 20, wherein
the control signal for controlling the additional signal to be multiplexed in the upper and bottom panel is generated from the widescreen television signal in the center panel of the same field.

24. A receiving apparatus of claim 20, wherein
the control signal or controlling the additional signal to be multiplexed in the upper and bottom panel is generated by extracting the horizontal low frequency component of the widescreen signal in the center panel.

25. A receiving apparatus of claim 20, wherein
the control signal for controlling the additional signal to be multiplexed in the upper and bottom panel is generated by extracting a component correlated with the additional signal from the widescreen television signal in the center panel, and calculating according to a conversion formula.

26. A receiving apparatus of claim 21, wherein
the control signal for controlling the additional signal to be multiplexed in the upper and bottom panel is generated from the widescreen television signal in the center panel one field before.

27. A receiving apparatus of claim 21, wherein
the control signal for controlling the additional signal to be multiplexed in the upper and bottom panel is generated from the widescreen television signal in the center panel of the same field.

28. A receiving apparatus of claim 21, wherein
the control signal for controlling the additional signal to be multiplexed in the upper and bottom panel is generated by extracting the horizontal low frequency component of the widescreen signal in the center panel.

29. A receiving apparatus of claim 21, wherein
the control signal or controlling the additional signal to be multiplexed in the upper and bottom panel is generated by extracting a component correlated with the additional signal from the widescreen television signal in the center panel, and calculating according to a conversion formula.
